# NEUE EUROPÄISCHE PATENTSCHRIFT

(11) **EP 1 497 096 B2**
(45) Veröffentlichungstag und Bekanntmachung des Hinweises auf die Entscheidung über den Einspruch: **21.09.2011**
(45) Hinweis auf die Patenterteilung: 09.11.2005
(21) Anmeldenummer: 03708279.9
(22) Anmeldetag: 02.04.2003
(51) Int. Cl.: B29C 45/17

(54) **PLATTE FÜR EINE SPRITZGIESSMASCHINE**
PLATE FOR AN INJECTION MOULDING MACHINE
PLAQUE POUR UNE MACHINE DE MOULAGE PAR INJECTION

(30) Priorität: 11.04.2002 DE 10215947
(43) Veröffentlichungstag der Anmeldung: 19.01.2005
(73) Patentinhaber: KraussMaffei Technologies GmbH, 80997 München (DE)
(72) Erfinder: WOHLRAB, Walter, 91781 Weissenburg (DE); KRABICHLER, Georg, 85276 Pfaffenhofen (DE); OSVALD, Vladimir, 80997 München (DE)
(74) Vertreter: Zollner, Richard
(86) Internationale Anmeldenummer: PCT/EP2003/003418
(87) Internationale Veröffentlichungsnummer: WO 2003/084731

(56) Entgegenhaltungen:
- EP-A- 0 747 196
- DE-A- 19 608 135
- DE-A- 19 855 663
- US-B1- 6 171 097

## Beschreibung

Die Erfindung betrifft eine Spritzgießmaschine, insbesondere eine Schließ- und/oder Düsenplatte zur Aufnahme eines Werkzeuges, gemäß dem Oberbegriff des Anspruchs 1.

Spritzgießmaschinen sind allgemein bekannt. Neben einer Plastifiziereinheit umfassen sie auch eine sogenannte Schließeinheit mit zumindest zwei Formaufspannplatten, an denen jeweils Form- bzw. Werkzeugteile aufgebracht sind. Beim Verschließen der Form bildet sich eine Kavität, in die plastifizierte Kunststoffmasse zur Ausbildung eines Produktes eingespritzt wird. Beim Schließen des Werkzeugs muss ein sogenannter Schließdruck aufgebracht werden, der ein Austreten des unter hohem Druck eingespritzten, plastifizierten Kunststoffes aus der Kavität verhindert. Die dabei auftretenden Kräfte zur Ausbildung der Schließkraft sind erheblich. Aus diesem Grund kommt es je nach Ausbildung und Konstruktion der Schließeinheit bzw. der Formaufspannplatten oftmals zu einer Verformung der Werkzeugaufspannplatten, mit der Folge, dass auch die darauf angeordneten Werkzeugteile nicht mehr plan aneinander anliegen.

Um diesem Effekt entgegen zu wirken, ist es aus der EP 0 747 196 B1 bekannt, eine Aufspannplatte mit zwei voneinander beabstandenden Wänden, die durch eine Zwischenstützenstruktur miteinander verbunden sind, zu verwenden. Die Zwischenstützenstruktur ist darauf abgestimmt, ein Durchbiegen der ersten Wand zu vermeiden. Durch die Ausbildung eines hinteren Plattenabschnittes in Form einer Wand, kommt es jedoch auch zu einer Kippbewegung in dem Bereich, in dem die Schließkräfte in die Platte eingeleitet werden. Beispielsweise unterliegen die durch Bohrungen in der Platten hindurch geführten Holme dadurch einer Biegebeanspruchung, was zu einer besonderen Belastung von Bauteilen der Schließeinheit (z. B. Säulen, Druckzylindereinheiten etc.) führt.

Aufgabe der vorliegenden Erfindung ist es, eine Platte für eine Spritzgießmaschine anzugeben, die sich dadurch auszeichnet, dass bei den Bereichen, über welche die Schließkräfte von der Schließeinheit eingeleitet werden, keine Biegebeanspruchung wirkt. Die Platte sollte in diesen Bereichen also nicht wegkippen oder sich nach außen verformen.

Diese Aufgabe wird bei einer Platte der eingangs genannten Art durch die Merkmale des kennzeichnenden Teils des Anspruchs 1 gelöst.

Demgemäß sind bei einer Platte der eingangs genannten Art, der vordere Plattenabschnitt, der hintere Plattenabschnitt und der Verbindungsabschnitt in ihren Dimensionen, ihrer Ausgestaltung und/oder ihren Anordnungen sowie die Position der Krafteinleitbereiche im hinteren Plattenabschnitt (2) so zueinander abgestimmt, dass sich die Flächenbereiche im hinteren Plattenabschnitt, an denen die Krafteinleitung erfolgt, unter Lastenwirkung im wesentlichen nur im Krafteinleitungsrichtung verformen. Durch eine entsprechend konstruktive Ausgestaltung lässt sich sicherstellen, dass auf Elemente, die in den Flächenbereichen angreifen, an denen die Krafteinleitung der Schließkraft in die Platte erfolgt, keinen Quer-, Seiten- oder Biegenbeanspruchungen ausgesetzt sind. Es kommt daher in diesem Bereich auch zu keinem Wegkippen. Vielmehr bleiben beispielsweise parallel zu einer Werkzeugaufspannfläche angeordneten Flächen in diesem Bereich auch bei einer Lasteinwirkung weiter parallel. Sie werden lediglich um eine bestimmte Distanz parallel verschoben. Wesentlich dabei ist die Positionierung der Bereiche der Krafteinleitung in dem hinteren Plattenabschnitt. Liegen diese Bereiche bei einer bestimmten Konstruktion zu weit außen, so kann es zu einer Kippbewegung nach außen kommen, liegen sie zu weit innen, so kann es zu einer entgegengesetzten Kippbewegung dieser Bereiche durch Verformung kommen. Natürlich müssen die entsprechenden Konstruktionsparameter aufeinander abgestimmt sein. So hängen die Positionen der Krafteinleitbereiche an dem hinteren Plattenabschnitt natürlich von der Positionierung des Abstützbereiches des hinteren Plattenabschittes an dem Verbindungsabschnitt ab. Auch spielen die Dimensionierung der einzelnen Strukturen eine entscheidende Rolle.

Gemäß der Erfindung ist der hintere Plattenabschnitt in Form eines umlaufenden, vorzugsweise an seinen Ecken verstärkten Rahmen ausgebildet. Durch die Ausgestaltung des hinteren Plattenabschnitts in Form eines umlaufenden Rahmens und einer entsprechenden Verbindung mit dem Verbindungsabschnitt lässt sich bereits im wesentlichen sicherstellen, dass in den Krafteinleitbereichen keine Biegeverformung auftritt.

Die Struktur des Verbindungsabschnittes kann insbesondere durch umlaufende Seitenwände definiert sein, die eine im wesentlichen stumpfkegelförmige Konstruktion zwischen dem vorderen und dem hinteren Plattenabschnitt bilden. Durch die Ausgestaltung des Verbindungsabschnittes in Form der umlaufenden Seitenwände wird eine besonders gute Stabilität erreicht.

Gemäß der bevorzugten Ausführungsform sind im hinteren Plattenabschnitt Bohrungen zur Aufnahme von Zugholmen angeordnet. Zwar können auch andere Konstruktionen zum Einleiten der Schließkräfte von der Schließeinheit in die Platte verwendet werden, jedoch stellen Zugholme eine besonders einfache Ausführungsform zur Realisierung einen entsprechende Zugkraftübertragung dar.

Gemäß der bevorzugten Ausführungsform erstreckt sich der Verbindungsabschnitt beim hinteren Plattenabschnitt nach außen über die Bohrungen hinaus; der Verbindungsabschnitt ist mit dem hinteren Plattenabschnitt also im wesentlichen außerhalb der Bohrungen verbunden. Aus diesem Grund werden sowohl der hintere Plattenabschnitt wie auch der Verbindungsabschnitt von den Bohrungen für die jeweiligen Zugholme vollständig durchdrungen.

Gemäß einer weiteren bevorzugten Ausführungsform sind der vordere Plattenabschnitt, der Verbindungsabschnitt und der hintere Plattenabschnitt in ihren Dimensionen, ihrer Gestaltung und/oder ihrer Anordnung femer so zueinander abgestimmt, dass die Werkzeugaufspannfläche unter Lasteinwirkung des hinteren Plattenteils im wesentlichen formstabil bleibt. Diesbezüglich verweisen wir auch die eingangs bereits erwähnte EP 0 747 196 B1.

Weitere Vorteile und vorteilhafte Ausführungsformen sind in den Unteransprüchen definiert.

Nachfolgend wird eine konkrete Ausführungsform der vorliegenden Erfindung mit Bezug auf die beigefügten Zeichnungen näher erläutert. Die Zeichnungen zeigen in
- Fig. 1: eine Draufsicht auf eine erfindungsgemäße Platte von hinten,
- Fig. 2: eine Schnittdarstellung der Platte aus Fig. 1 gemäß Schnittlinie A-A aus Fig. 5,

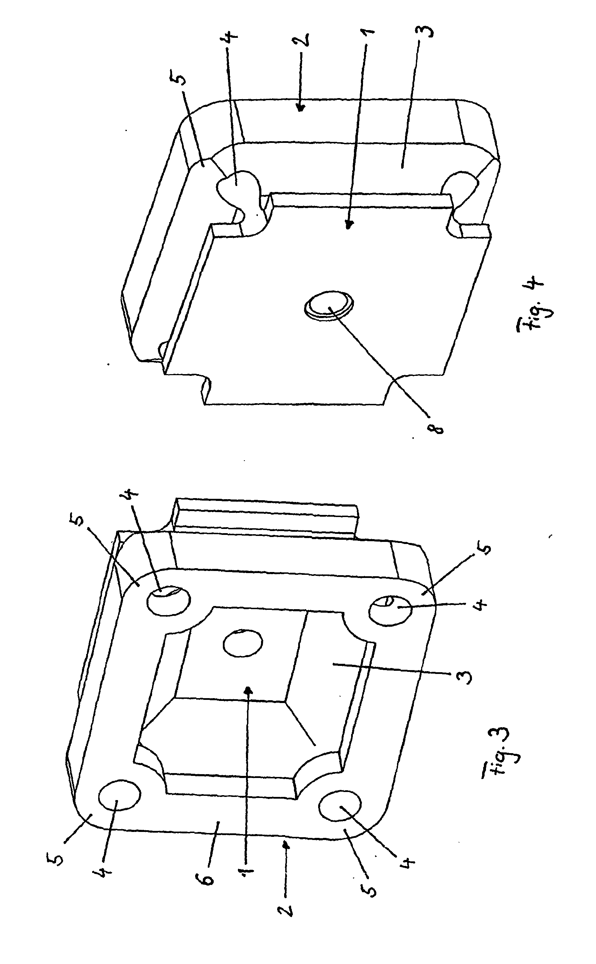

- Fig. 3: eine perspektivische Schemazeichnung der Platte aus Fig. 1 von hinten,
- Fig. 4: eine perspektivische Schemazeichnung der Platte aus Fig. 1 von vorne,
- Fig. 5: eine Draufsicht der Platte aus Fig. 1 von vorne und
- Fig. 6: eine Seitenansicht der Platte aus Fig. 1, jedoch mit Werkzeug.

Bei der Erläuterung des vorliegenden Ausführungsbeispiels wird die Werkzeugaufspannfläche der Platte als Vorderseite und der Bereich in dem die Druckkräfte über Holme eingeleitet werden, als hinterer Bereich bezeichnet. Entsprechend sind auch die örtlichen Bestimmung "hinten" und "vorne" zu verstehen.

Das vorliegende Ausführungsbeispiel zeigt lediglich eine Werkzeugaufspannplatte für eine nicht weiter dargestellte Schließeinheit einer Spritzgießmaschine. Die Werkzeugaufspannplatte umfasst einen vorderen Plattenabschnitt 1, der im wesentlichen plattenförmig ausgebildet ist, eine innere Zentralbohrung 8 sowie nicht weiter nummerierten Eckausnehmungen aufweist. Der vordere Plattenabschnitt 1 ist über einen Verbindungsabschnitt 3 mit einem hinteren Plattenabschnitt 2 verbunden. Der hintere Plattenabschnitt 2 ist in Form eines umlaufenden Rahmens 6 ausgebildet, welcher in den Eckbereichen jeweils Verstärkungen 5 aufweist. Durch die verstärkten Eckbereiche des hinteren Plattenabschnittes 2 sind jeweils Bohrungen 4 zur Aufnahme von nicht dargestellten Zugholmen angeordnet.

Der Verbindungsabschnitt 3 besteht vorliegend aus Verbindungswänden, die sich im wesentlichen vollständig umlaufend zwischen dem vorderen Plattenabschnitt 1 und dem hinteren Plattenabschnitt 2 erstrecken. Die den Verbindungsabschnitt 3 bildenden Wände verlaufen im wesentlichen konisch nach vorne, so dass sie - wenigstens abschnittweise - einen Pyramidenstumpf ausbilden, an dessen zulaufendem Ende sich der vordere Plattenabschnitt 1 und an dessen verbreiternden Ende sich der hintere Plattenabschnitt 2 in Form des umlaufenden Rahmens 6 befindet. Natürlich sind auch andere Konstruktionen für den Verbindungsabschnitt denkbar. Es müssen lediglich der vordere Plattenabschnitt 1 und der hintere Plattenabschnitt 2 in einer geeigneten Weise verbunden werden.

Der Verbindungsabschnitt 3 ist mit dem hinteren Plattenabschnitt 2 an dessen äußeren Bereich verbunden bzw. geht in diesen über. Diesbezüglich liegt der Verbindungs- oder Übergangsbereich des Verbindungsabschnitts 3 mit dem hinteren Plattenabschnitt 2 außerhalb der im hinteren Plattenabschnitt 2 angeordneten Bohrungen 4. Aus diesem Grund müssen sich die durch den hinteren Plattenabschnitt 2 erstreckenden Bohrungen 4 ebenfalls durch die Wände des Verbindungsabschnittes 3 erstrecken. In diese Bohrungen 4 eingesetzten Holme (nicht dargestellt) durchlaufen dann ferner die Eckausnehmungen des vorderen Plattenabschnittes 1.

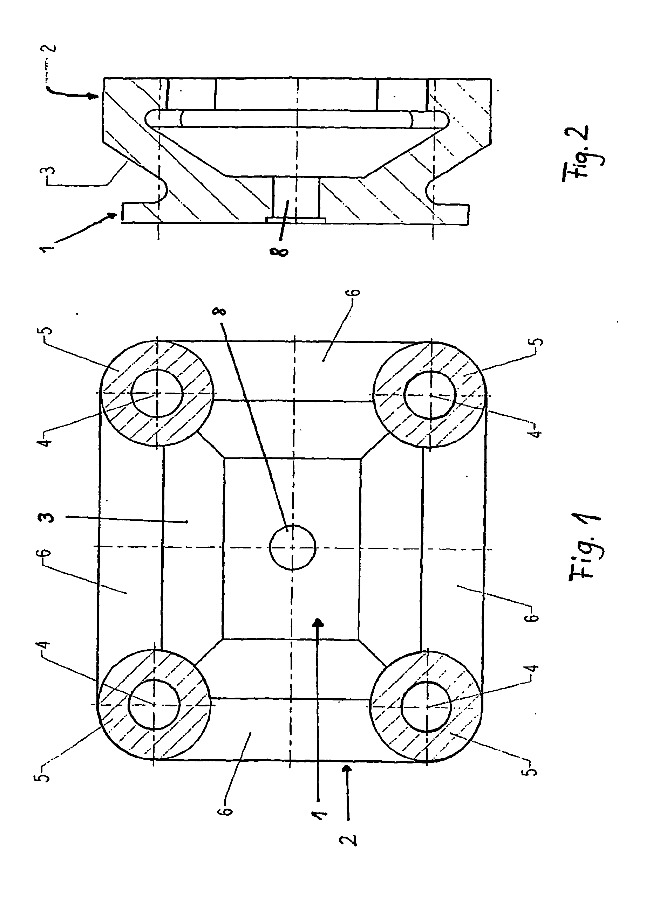

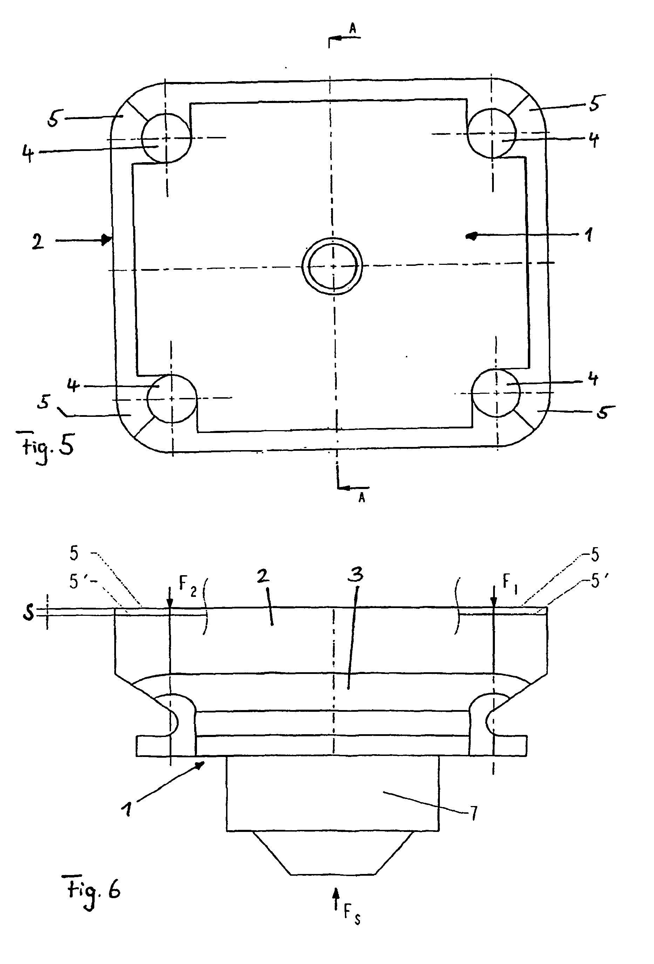

Wie insbesondere in Fig. 6 dargestellt ist, wirkt bei einem geschlossenen Werkzeug (von dem vorliegend nur eine Werkzeughälfte dargestellt ist), eine von einer anderen Werkzeughälfte ausgeübte Schließkraft F_{S} auf das Werkzeug als reaktive Kraft zu den über Holme auf den hinteren Plattenabschnitt 2 ausgeübten Zugkräften F₁ und F₂. Werden die Zugkräfte F₁ und F₂ bei der vorliegenden Konstruktion in den im wesentlichen als ringförmigen Verstärkungsbereich 5 um die Bohrungen 4 ausgeführten Einleitungsbereich (vgl. Fig. 1) aufgebracht, so erfolgt lediglich Parallelverschiebung dieses Bereichs in Schließrichtung nach vorne, also von dem Bezugszeichen 5 zum Bezugszeichen 5'. Es kommt zu keiner seitlichen Bewegung oder Verkippbewegung. Dadurch wird sichergestellt, dass ein in einer Bohrung angeordneter Zugholm bei einer Zugbelastung nicht durch eine Quer- oder Kippbewegung beansprucht wird wodurch Biegekräfte im Bereich der Säule vermieden werden. Es erfolgt lediglich eine parallele Bewegung des Bohrungsabschnittes in deren Achsrichtung.

Insgesamt wird dadurch die Stabilität, die Festigkeit bzw. der Verschleiß von Anbauten in diesem Bereich um ein Vielfaches erhöht. Biegungen werden von der Säule ferngehalten und angebaute Drucksysteme unterliegen einem geringen Verschleiß. Ist die in den vorderen ab Plattenabschnitt 1 vorliegend bildende Platte mit deren Enden seitlich nach außen verlängert ausgebildet, so wirkt diese globale Z-förmige Struktur der Platte ebenfalls einer Verformung der Werkzeugaufspannfläche entgegen.

Überdies ist durch die erfindungsgemäße Konstruktion des hinteren Plattenabschnittes 2 sowie die pyramidenstumpfartige Ausbildung des Verbindungsabschnittes eine gute Zugänglichkeit der zentralen Bohrung 8 im vorderen Plattenabschnitt sichergestellt, so dass eine Ankoppelung einer Düsenspitze von einer Plastifiziereinheit an ein Werkzeug oder eine Form ohne weiteres möglich ist.

Die vorliegende Ausführungsform stellt nicht die einzige Möglichkeit zur Ausführung der vorliegenden Erfindung dar. Der Schutzbereich der Erfindung wird von den Ansprüchen 1-7 definiert.

### Bezugszeichenliste

- 1: vordere Plattenabschnitt
- 2: hintere Plattenabschnitt
- 3: Verbindungsabschnitt
- 4: Bohrung
- 5: Verstärkte Eckbereiche
- 6: Rahmen
- 7: Werkzeug
- 8: Bohrung

- F_{S}: Schließkraft
- F₁, F₂: Zugkraft
- S: Verformungsweg

## Patentansprüche

1. Platte für eine Spritzgießmaschine, insbesondere Schließ- und/oder Düsenplatte zur Aufnahme eines Werkzeuges (7) mit einem vorderen, eine Werkzeugaufspannfläche aufweisenden Plattenabschnitt (1), einem hinteren Plattenabschnitt (2), über den eine Krafteinleitung mittels einer Schließeinrichtung an zumindest zwei Positionen in die Platte möglich ist, und einem Verbindungsabschnitt (3), welcher den vorderen und den hinteren Plattenabschnitt (1, 2) miteinander verbindet, wobei,
der hintere Plattenabschnitt (2) in Form eines umlaufenden Rahmens (6) ausgebildet ist,
im hinteren Plattenabschnitt (2) Bohrungen (4) zur Aufnahme von Zugholmen angeordnet sind, und
der Verbindungsabschnitt (3) mit dem hinteren Plattenabschnitt (2) zumindest im wesentlichen außerhalb der Bohrungen (4) verbunden ist,
**dadurch gekennzeichnet, dass** der hintere Plattenabschnitt (2) und der vordere Plattenschnitt (1) über umlaufende Seitenwände (3) verbunden sind, welche den Verbindungsabschnitt (3) bilden,
dass der Verbindungsabschnitt (3) unter einem spitzen Winkel in den vorderen Plattenabschnitt (1) mündet,
wobei die Position der Bohrungen im hinteren Plattenabschnitt (2) auf die konstruktive Ausführung von vorderem Plattenabschnitt (1), Verbindungsabschnitt (3) und hinterem Plattenabschnitt (2) derart zueinander abgestimmt sind, dass sich die Flächenbereiche im hinteren Plattenabschnitt (2), an denen die Krafteinleitung erfolgt, unter Lasteinwirkung im wesentlichen nur in Krafteinleitungsrichtung verformen.

2. Platte nach Anspruch 1,
**dadurch gekennzeichnet,**
**dass** vier Bohrungen (4) vorgesehen sind, von denen sich jede im wesentlichen in einem Eckbereich des hinteren Plattenabschnittes (2) befindet.

3. Platte nach Anspruch 1 oder 2,
**dadurch gekennzeichnet,**
**dass** die Bohrungen (4) sowohl den hinteren Plattenabschnitt (2) als auch den Verbindungsabschnitt (3) vollständig durchdringen.

4. Platte nach einem der vorhergehenden Ansprüche,
**dadurch gekennzeichnet,**
**dass** der vordere Plattenabschnitt (1) im wesentlichen aus einem plattenförmigen Element besteht.

5. Platte nach Anspruch 4, **dadurch gekennzeichnet, dass** das plattenförmige Element bezüglich des Verbindungsbereiches zwischen dem Verbindungsabschnitt (3) und dem vorderen Plattenabschnitt (1) seitlich nach außen übersteht.

6. Platte nach einem der vorhergehenden Ansprüche, **dadurch gekennzeichnet, dass** der hintere Plattenabschnitt und/oder der Verbindungsabschnitt (3) derart einen Hohlbereich bildend ausgestaltet sind, dass der vordere Plattenabschnitt (1) in dessen inneren Bereich frei von Richtung des hinteren Plattenteils (2) zugänglich ist.

7. Platte nach einem der vorhergehenden Ansprüche, **dadurch gekennzeichnet, dass** der vordere Plattenabschnitt (1) eine Zentralbohrung aufweist.

## Claims

1. A plate for an injection moulding machine, especially a closing and/or nozzle plate for receiving a tool (7), comprising a front plate section (1) provided with a tool clamping surface, a rear plate section (2) enabling force to be introduced into the plate by means of a closing device at at least two positions and a connecting section (3) which connects the front and rear plate sections (1, 2), wherein
the rear plate section (2) is constructed in the form of a circumferential frame (6),
holes (4) are arranged in the rear plate section (2) to receive tension struts and the connecting section (3) is connected to the rear plate section (2) at least substantially outside the holes (4),
**characterized in that** the rear plate section (2) and the front plate section (1) are connected by means of circumferential side walls (3) which form the connecting section (3),
the connecting section (3) opens into the front plate section (1) at an acute angle,
wherein the position of the holes in the rear plate section (2) is matched to the design of the front plate section (1), the connecting section (3) and the rear plate section (2) such that the surface areas in the rear plate section (2) at which force is introduced substantially only become deformed under the action of load in the direction in which force is introduced.

2. The plate according to claim 1,
**characterised in**
**that** four holes (4) are provided, each of which is located substantially in one corner area of the rear plate section (2).

3. The plate according to claim 1 or claim 2,
**characterised in**
**that** the holes (4) penetrate completely through the rear plate section (2) and also the connecting section (3).

4. The plate according to any one of the preceding claims,
**characterised in**
**that** the front plate section (1) substantially consists of a plate-shaped element.

5. The plate according to claim 4,
**characterised in**
**that** the plate-shaped element projects laterally outwards in relation to the connecting region between the connecting section (3) and the front plate section (1).

6. The plate according to any one of the preceding claims,
**characterised in**
**that** the rear plate section and/or the connecting section (3) are configured such that they form a hollow region such that the front plate section (1) is freely accessible in its inner region from the direction of the rear plate section (2).

7. The plate according to any one of the preceding claims,
**characterised in**
**that** the front plate section (1) has a central hole.

## Revendications

1. Plaque pour machine de moulage par injection, en particulier plaque de fermeture et/ou de filière pour recevoir un outil (7), comprenant une section de plaque avant (1) présentant une surface de serrage d'outil, une section de plaque arrière (2) par laquelle une introduction de force au moyen d'un dispositif de fermeture sur au moins deux positions dans la plaque est possible, et une section de liaison (3) qui relie les plaques avant et arrière (1, 2) l'une à l'autre,
dans lequel la section de plaque arrière (2) a la forme d'un cadre (6) périphérique,
des perçages (4) pour recevoir des travées de traction sont disposés dans la section de plaque arrière (2) et la section de liaison (3) est reliée à la section de plaque arrière (2) au moins essentiellement à l'extérieur des perçages (4),
**caractérisée en ce que** la section de plaque arrière (2) et la section de plaque avant (1) sont reliées par des parois latérales périphériques (3), lesquelles forment la section de liaison (3),
que la section de liaison (3) débouche en angle aigu dans la section de plaque avant (1),
sachant que la position des perçages dans la section de plaque arrière (2) est définie de telle manière les uns par rapport aux autres par rapport à la construction de la section de plaque avant (1), de la section de liaison (3) et de la section de plaque arrière (2) que les parties de surface dans la section de plaque arrière (2) sur lesquelles l'introduction de force a lieu, se déforment essentiellement uniquement dans le sens d'introduction de la force sous l'effet de la charge.

2. Plaque selon la revendication 1,
**caractérisée en ce que**
il est prévu quatre alésages (4), dont chacun se trouve sensiblement dans une zone d'angle de la section de plaque arrière (2).

3. Plaque selon la revendication 1 ou 2,
**caractérisée en ce que**
les alésages (4) transpercent totalement aussi bien la section de plaque arrière (2) que la section de liaison (3).

4. Plaque selon une des revendications précédentes,
**caractérisée en ce que**
la section de plaque avant (1) consiste substantiellement en un élément en forme de plaque.

5. Plaque selon la revendication 4,
**caractérisée en ce que**
l'élément en forme de plaque est proéminent latéralement.vers l'extérieur par rapport à la zone de liaison entre la section de liaison (3) et la section de plaque avant (1).

6. Plaque selon une des revendications précédentes,
**caractérisée en ce que**
la section de plaque arrière et/ou la section de liaison (3) sont réalisées de façon à constituer une zone creuse de manière à ce que la section de plaque avant (1) soit librement accessible dans sa zone intérieure depuis le sens de la partie arrière de la plaque (2).

7. Plaque selon une des revendications précédentes,
**caractérisée en ce que**
la section de plaque avant (1) présente un alésage central.
